# EUROPÄISCHE PATENTSCHRIFT

(11) **EP 1 547 832 B1**
(45) Veröffentlichungstag und Bekanntmachung des Hinweises auf die Patenterteilung: **11.03.2009**
(21) Anmeldenummer: 04029956.2
(22) Anmeldetag: 17.12.2004
(51) Int. Cl.: B60G 17/015

(54) **Integration einer Luftfederungselektronik in ein elektronisches Luftaufbereitungssystem**
Integration of an air-spring control into an electronic air-conditioning system
Integration du réglage d'un ressort pneumatique dans un système de climatisation électronique

(30) Priorität: 23.12.2003 DE 10360881
(43) Veröffentlichungstag der Anmeldung: 29.06.2005
(73) Patentinhaber: KNORR-BREMSE SYSTEME FÜR NUTZFAHRZEUGE GMBH, 80809 München (DE)
(72) Erfinder: Karthäuser, Klaus, 71723 Grossbottwar (DE); Klement, Roland, 82407 Haunshofen (DE)
(74) Vertreter: Schönmann, Kurt

(56) Entgegenhaltungen:
- DE-A1- 4 039 005
- DE-A1- 4 305 958
- DE-A1- 19 716 197

## Beschreibung

Die Erfindung betrifft ein Steuergerät für ein Luftfederungssystem und/oder ein Luftaufbereitungssystem.

Bekannt sind elektronische Luftfederungssysteme, auch elektronische Niveauregelungssysteme genannt, und elektronische Luftaufbereitungssysteme, die jeweils von einer gesonderten, systemeigenen Steuerungselektronik angesteuert werden.

Die gattungsgemäße deutsche Offenlegungsschrift 43 05 958 beschreibt ein System mit wenigsten zwei unterschiedlichen Systemfunktionen. Diese unterschiedlichen Systemfunktionen werden durch die Ansteuerung verschiedener funktionsspezifischer Komponenten erreicht. Derartige Systemfunktionen können sein: Niveaureglung einerseits und Wankregelung andererseits, Fensterbetätigung einerseits und Schiebedachbetätigung andererseits, Regelung der Klimaanlage einerseits und Betätigung der Zentralveniegelung andererseits, Antiblockierregelung einerseits und Fahrwerkregelung andererseits. Die funktionsspezifischen Komponenten sind Stellglieder, wie z. B. Magnetventile oder Elektromotoren. Dabei sind Auswahlmittel vorgesehen, mittels derer der eine Teil der funktionsspezifischen Komponenten in Reaktion auf programmgemäße Ansteuerung keine Änderung vollzieht, während der andere Teil der funktionsspezifischen Komponenten zur Erreichung der jeweiligen Systemfunktion ansteuergemäß arbeitet.

Die DE 40 39 005 A1 offenbart ein hierarchisches System von Steuereinheiten (siehe hierzu Fig. 1) Ganz oben in der Hierarchie steht eine Zentralsteuereinheit, dann kommen jeweils parallel eine Sub-Hauptantriebssteuerung und eine Sub-Hauptfahrtsteuerung. Der Sub-Hauptantriebssteuerung ist eine Maschinensteuerung (Motorsteuerung) und eine Getriebesteuerung und der Sub-Hauptfahrtsteuerung eine Lenksteuereinrichung, eine Radaufhängungssteuereinrichtung und eine Bremsensteuereinrichtung untergeordnet.

Die Systemelektronik der Luftfederungssysteme von Nutzfahrzeugen nach dem Stand der Technik ist in einem eigenen elektronischen Steuergerät aufgenommen, das in dem Führerhaus des Nutzkraftfahrzeuges untergebracht ist. Dies hat sich in der historische Entwicklung als zweckmäßig erwiesen, da das elektronische Steuergerät dort nicht spritzwasserdicht abgedichtet werden muss und über eine Fernbedienung direkt betätigt werden kann. Dies hat zwangläufig zur Bedingung, dass Verbindungskabel vom Führerhaus zu den Steuerelementen des Luftfederungssystems geführt werden müssen. Bei modernen Nutzkraftfahrzeugen ist der Motor häufig unter dem Führerhaus angeordnet. Um an Motor heranzukommen, kann das Führerhaus in der Regel - zumindest bei den neueren Lastkraftwagen - über ein Kippgelenk abgekippt werden, so dass der Motor und der Antriebsstrang frei zugänglich sind. Die Kabelverbindung muss in diesem Fall über das Kippgelenk durchgeführt werden.

Nachteilig an dieser Anordnung sind die große notwendige Kabellänge und das beschränkte Platzangebot zur Kabeldurchführung im Kippgelenk. Das Steuergerät des Luftfedersystems benötigt ein eigenes Gehäuse und eigene elektronische Bauteile, wie beispielsweise Schutzschaltungen zur Spannungsversorgung.

Der Erfindung liegt die Aufgabe zugrunde, den Verkabelungsaufwand zu reduzieren und Systemkosten durch Reduzierung der einzelnen Bauelemente zu verringern.

Diese Aufgabe wird gelöst durch ein Steuergerät mit den Merkmalen des Anspruchs 1. Vorteilhafte Ausgestaltungen ergeben sich aus den Unteransprüchen.

Durch die Zusammenfassung von der Steuerungselektronik des Luftfederungssystems und der Steuerungselektronik des Luftaufbereitungssystems in einem zentralen Steuergerät können beide Steuerungen in nur einem Gehäuse untergebracht werden und einige elektronische Komponenten, wie beispielsweise Spannungsversorgung, Kommunikationstreiber, Sensorauswerteschaltung usw. können doppelt genutzt werden. Ebenfalls können Hardwarespeichersysteme für die Steuerungselektronik des Luftfederungssystems und die elektronische Steuerung des Luftaufbereitungssystems gleichzeitig genutzt werden. Die Steuerungselektronik des Luftfederungssystems und die Steuerungselektronik des Luftaufbereitungssystems weisen in ihren Steuerungsprogrammen eine Logikstruktur auf, die derart entkoppelt sind, dass beide Steuerungsprogramme für sich geändert werden können, insbesondere bei einem Softwareupdate. Auf diese Weise sind beide Systeme softwareseitig weitgehend autark.

Das Steuergerät ist vorteilhafter Weise derart aufgebaut, dass in einem frei programmierbaren Rechner verschiedene Steuersoftware verwendet werden kann. Dies bietet ein Maximum an Flexibilität. Dadurch können Komponenten des Steuergerätes für die beiden Zwecke Luftfederungssystem und Luftaufbereitungssystem verwendet werden.

In einer vorteilhaften Ausgestaltung der Erfindung werden sämtliche Steuersignale für das Luftfederungssystem und das Luftaufbereitungssystem über ein zweipoliges Kabel aus dem Steuergerät geführt. Damit kann eine Kabeldurchführung im Kippgelenk platzsparend ausgeführt werden. Bei einer Ausführung als verdrilltes Kabel, als so genanntes "Twisted Pair" wird auch bei einer relativ großen Kabellänge, wie sie bei einem Sattelschlepper notwendig ist, eine störende elektromagnetische Einkopplung gering gehalten.

Vorzugsweise erfolgt die Systeminformation für das Luftfederungssystem und das Luftaufbereitungssystem über eine CAN-Bus-Schnittstelle. Auf diese Weise können verschiedene Informationen in einem genormten System über ein zweipoliges Kabel übermittelt werden.

Vorzugsweise weisen die Steuerungselektronik des Luftfederungssystems und die Steuerungselektronik des Luftaufbereitungssystems eine direkt an das Steuergerät geschlossene Fernbedienung auf. Der Verkabelungsaufwand wird dadurch gering gehalten.

In einer bevorzugten Ausgestaltung der Erfindung weisen die Steuerungselektronik des Luftfederungssystems und die Steuerungselektronik des Luftaufbereitungssystems eine Schnittstelle auf, die derart eingerichtet ist, dass bei Fahrzeugen ohne elektronisches Luftaufbereitungssystem die Komponenten des Luftfederungssystems ohne Modifikation eingesetzt werden können. Dies gewährleistet eine hohe Flexibilität der Einsatzmöglichkeiten bei geringer Komponentenvielfalt.

In einer vorteilhaften Ausgestaltung der Erfindung ist in das Luftaufbereitungssystem eine elektronische Feststellbremse integrierbar. Auf diese Weise werden elektronische Komponenten, wie beispielsweise Spannungsversorgung, Kommunikationstreiber, Sensorauswerteschaltung usw. auch für die elektronische Feststellbremse genutzt.

In einer bevorzugten Ausgestaltung der Erfindung ist ein Drucksensor eines Luftfederungssystems in das Luftaufbereitungssystem integrierbar. Dies hat eine kompakte Bauweise zum Vorteil.

## Patentansprüche

1. Steuergerät für ein Luftfederungssystem und/oder ein Luftaufbereitungssystem,
**dadurch gekennzeichnet, dass** als zentrales Steuergerät die Steuerungselektronik des Luftfederungssystems und die Steuerelektronik des Luftaufbereitungssystems zusammengefasst sind und dass die Steuerungselektronik des Luftfederungssystems und die Steuerungselektronik des Luftaufbereitungssystems in ihren Steuerungsprogrammen eine Logikstruktur aufweisen, die derart entkoppelt sind, dass beide Steuerungsprogramme für sich geändert werden können, insbesondere bei einem Softwareupdate.

2. Steuergerät nach Anspruch 1, **dadurch gekennzeichnet, dass** das Steuergerät derart aufgebaut ist, dass in einem frei programmierbaren Rechner verschiedene Steuersoftware verwendet werden kann.

3. Steuergerät nach Anspruch 1 oder 2, **dadurch gekennzeichnet, dass** sämtliche Steuersignale für das Luftfederungssystem und das Luftaufbereitungssystem über ein zweipoliges Kabel aus dem Steuergerät geführt werden.

4. Steuergerät nach einem der Ansprüche 1 bis 3, **dadurch gekennzeichnet, dass** die Systeminformation für das Luftfederungssystem und das Luftaufbereitungssystem über eine CAN-Bus-Schnittstelle erfolgt.

5. Steuergerät nach einem der Ansprüche 1 bis 4, **dadurch gekennzeichnet, dass** die Steuerungselektronik des Luftfederungssystem und die Steuerungselektronik des Luftaufbereitungssystems eine direkt an das Steuergerät angeschlossene Fernbedienung aufweisen.

6. Steuergerät nach einem der Ansprüche 1 bis 5, **dadurch gekennzeichnet, dass** die Steuerungselektronik des Luftfederungssystems und die Steuerungselektronik des Luftaufbereitungssystems eine Schnittstelle aufweisen, die derart eingerichtet ist, dass bei Fahrzeugen ohne ein elektronisches Luftaufbereitungssystem die Komponenten des Luftfederungssystems ohne Modifikation eingesetzt werden können.

7. Steuergerät nach einem der Ansprüche 1 bis 6, **dadurch gekennzeichnet, dass** in das Steuergerät ein Steuergerät einer elektronischen Feststellbremse integrierbar ist.

## Claims

1. Controller system for a pneumatic suspension system and/or an air conditioning system,
**characterised in that** the electronic control system of said pneumatic suspension system and the electronic control system of said air conditioning system are combined in a central controller system and that said electronic control system of said pneumatic suspension system and said electronic control system of said air conditioning system present a logic structure in their control programmes which are decoupled in such a way that both control programmes may be modified separately, in particular in the case of a software update.

2. Controller system according to Claim 1, **characterised in that** the controller system is structured in such a manner that different control software may be used in a freely programmable computer.

3. Controller system according to Claim 1 or 2, **characterised in that** all the control signals for said pneumatic suspension system and said air conditioning system are passed via a two-pole cable out of the controller system.

4. Controller system according to any of the Claims 1 to 3, **characterised in that** the system information for said pneumatic suspension system and said air conditioning system is transferred via a CAN bus interface.

5. Controller system according to any of the Claims 1 to 4, **characterised in that** said electronic control system of said pneumatic suspension system and said electronic control system of said air conditioning system comprise a remote controller directly connected to the controller system.

6. Controller system according to any of the Claims 1 to 5, **characterised in that** said electronic control system of said pneumatic suspension system and said electronic control system of said air conditioning system present an interface so set up that the components of said pneumatic suspension system may be used without any modification in vehicles not equipped with an electronic air conditioning system.

7. Controller system according to any of the Claims 1 to 6, **characterised in that** a controller of an electronic parking brake may be integrated into the controller system.

## Revendications

1. Appareil de commande pour une suspension pneumatique et/ou un système de traitement de l'air,
**caractérisé en ce que** le système de commande électronique de ladite suspension pneumatique et le système de commande électronique dudit système de traitement de l'air sont combinés dans un appareil de commande central, et **en ce que** ledit système de commande électronique de ladite suspension pneumatique et ledit système de commande électronique dudit système de traitement de l'air présentent une structure de logique dans leurs programmes de commande, qui sont découplés d'une manière à permettre une modification séparée des deux programmes de commande, en particulier au cas d'une mise à jour du logiciel.

2. Appareil de commande selon la revendication 1, **caractérisé en ce que** l'appareil de commande est structuré d'une manière à permettre l'emploi d'un logiciel de commande différent sur un ordinateur librement programmable.

3. Appareil de commande selon la revendication 1 ou 2, **caractérisé en ce que** tous les signaux de commande pour ladite suspension pneumatique et ledit système de traitement de l'air sont passés via un câble à deux fiches en dehors de l'appareil de commande

4. Appareil de commande selon une quelconque des revendications 1 à 3,
**caractérisé en ce que** l'information de système pour ladite suspension pneumatique et ledit système de traitement de l'air est transférée via une interface de bus type CAN.

5. Appareil de commande selon une quelconque des revendications 1 à 4, **caractérisé en ce que** ledit système de commande électronique de ladite suspension pneumatique et ledit système de commande électronique dudit système de traitement de l'air comprennent un moyen de télécommande relié directement à l'appareil de commande.

6. Appareil de commande selon une quelconque des revendications 1 à 5, **caractérisé en ce que** ledit système de commande électronique de ladite suspension pneumatique et ledit système de commande électronique dudit système de traitement de l'air présentent une interface si aménagée qu'on puisse utiliser les composants de ladite suspension pneumatique sans aucune modification dans des véhicules non équipés d'un système électronique de traitement de l'air.

7. Appareil de commande selon une quelconque des revendications 1 à 6, **caractérisé en ce qu'**une unité de commande d'un frein électronique d'arrêt puisse s'intégrer dans l'appareil de commande.
